# FASCICULE DE BREVET EUROPEEN

(11) **EP 3 946 867 B1**
(45) Date de publication et mention de la délivrance du brevet: **05.06.2024**
(21) Numéro de dépôt: 20721630.0
(22) Date de dépôt: 30.04.2020
(51) Int. Cl.: B28D 5/00, B28D 5/04

(54) **PROCÉDÉ DE RECYCLAGE**
RECYCLINGVERFAHREN
RECYCLING PROCESS

(30) Priorité: 06.05.2019 FR 1904723
(43) Date de publication de la demande: 09.02.2022
(73) Titulaire: COMMISSARIAT À L'ÉNERGIE ATOMIQUE ET AUX ÉNERGIES ALTERNATIVES, 75015 Paris (FR)
(72) Inventeur: BRIZE, Virginie, 38054 GRENOBLE CEDEX 09 (FR); COUSTIER, Fabrice, 38054 GRENOBLE CEDEX 09 (FR)
(74) Mandataire: Brevalex
(86) Numéro de dépôt international: PCT/EP2020/062129
(87) Numéro de publication internationale: WO 2020/225127

(56) Documents cités:
- EP-A1- 3 213 896
- EP-A1- 3 424 663
- WO-A1-2018/215742
- DE-A1-102013 204 113
- US-A1- 2010 126 489
- US-A1- 2010 129 989
- US-A1- 2011 126 813
- US-A1- 2011 256 666
- US-A1- 2012 282 429
- US-A1- 2015 136 743

## Description

### DOMAINE TECHNIQUE

La présente invention se rapporte au domaine général de la découpe ou sciage par fil à abrasifs, et plus particulièrement au domaine de la découpe par fil diamanté.

L'invention concerne un procédé de recyclage d'un mélange de particules issu d'un procédé de découpe au fil à abrasif.

L'invention trouve des applications dans de nombreux domaines industriels, et notamment pour la fabrication de cellules photovoltaïques puisqu'elle permet d'obtenir des tranches fines de substrats (appelés « plaquettes » ou plus généralement « wafers » en anglais), par exemple en silicium cristallin.

L'invention est particulièrement intéressante puisqu'elle permet d'obtenir des poudres de silicium (« kerf »), issues de la découpe au fil à abrasifs, ayant un très haut degré de pureté sans augmenter les coûts d'élaboration.

### ÉTAT DE LA TECHNIQUE ANTÉRIEURE

Actuellement, dans le domaine des cellules photovoltaïques, 90 à 95% des tranches fines de silicium monocristallin sont découpées par la technique de sciage au fil à abrasif (notamment au fil diamanté) à partir de briques de silicium.

La brique de silicium est positionnée sur un support dit sacrificiel et la découpe est réalisée en présence d'un fluide de découpe contenant un lubrifiant qui limite l'échauffement de la brique de silicium et/ou du fil.

La découpe des briques résulte d'un mouvement longitudinal du fil diamanté, le plus souvent alternatif (inversion périodique de sens).

Classiquement, pour réaliser cette opération, le fil à abrasif est enroulé plusieurs centaines de fois, voire plusieurs milliers de fois, autour de guides cylindriques rotatifs rainurés qui déterminent l'écartement entre les passes, de manière à former une nappe de fils. Pour les applications photovoltaïques, l'écartement entre les passes est de 150 à 300 µm, afin d'obtenir des plaquettes de silicium d'environ 180 µm d'épaisseur.

Chaque coupe met en oeuvre un fil de plusieurs centaines de mètres, voire de plusieurs kilomètres, qui effectue des allers-retours dans la brique à découper avec un faible renouvellement à chaque cycle (de l'ordre de 1 à 3% au maximum). Actuellement, le sciage d'un bloc de silicium de 156 mm de côté nécessite de 2 à 3 heures et une consommation équivalente de 0,5 à 5 mètres par tranche de silicium découpée.

Lors des découpes, une importante quantité de poudre de silicium (appelée « kerf ») est entraînée par le liquide et y reste en suspension. A titre illustratif, pour une découpe d'une brique de silicium de 600mm de longueur en tranches de 156 x 156 mm et de 180 µm d'épaisseur avec un fil 80 µm, 12 kg de copeaux de silicium seront présents dans le liquide en fin de coupe, soit une concentration de l'ordre de 5% en masse dans le liquide. On estime qu'environ 36 % du silicium est perdu lors de la découpe.

Après la coupe, ce liquide chargé de poudres de silicium est traité comme un déchet industriel. Classiquement, la poudre de silicium est récupérée par filtration et/ou centrifugation. La poudre extraite peut ensuite être valorisée, par exemple en la recristallisant. Afin d'adresser le marché photovoltaïque, la pureté de la poudre de silicium issue du sciage doit être la plus élevée possible.

Cependant, la poudre de silicium issue du procédé de découpe est contaminée par des éléments métalliques mais aussi par des éléments légers, tels que le carbone et l'oxygène, rédhibitoires pour une future cristallisation.

La contamination en éléments métalliques provient du support de découpe. La plupart des supports de découpe comprennent une résine polymère chargée de particules le plus souvent en alumine (Al₂O₃). Afin de limiter cette contamination, une solution consiste à découper une pièce en silicium sur un support contenant du silicium ou étant en silicium (EP3424663 A1).

La contamination en C et O peut provenir du lubrifiant ajouté au liquide de découpe. Dans ce cas, ces éléments légers se retrouvent sous forme greffés et sont facilement éliminés par un rinçage, une attaque chimique simple (HCl) et/ou encore un traitement thermique.

La contamination en C et O peut également provenir de la résine polymère formant le support de découpe. Cette dernière contamination est très difficile à éliminer car la plupart des résines ne se dégradent pas, même dans des solutions acides. Pour éviter cette contamination, une solution serait d'arrêter la centrifugation ou tout autre système de filtration pour récolter la poudre en ligne juste avant que le fil n'entame le support. Mais cette solution n'est pas très pratique dans un environnement industriel puisque, généralement, de nombreuses machines fonctionnent simultanément et utilisent un système centralisé d'alimentation en liquide de coupe. La gestion de l'arrêt de la filtration sur plusieurs équipements pour éviter la contamination du liquide de coupe « propre » par un liquide de coupe « contaminé » serait donc très difficile à réaliser, voire pratiquement impossible à faire.

Le document US 2011/126813 A1 décrit un procédé de recyclage d'un mélange de particules issu d'un procédé de découpe au fil à abrasif, par l'utilisation d'un tensioactif dans le fluide de nettoyage à base d'eau pour envelopper les particules de silicium dès qu'elles sont arrachées (coupées) de la brique ou du lingot de silicium pendant le processus de découpe. L'oxygène présent dans l'eau est effectivement empêché d'atteindre le silicium lui-même. Le tensioactif présent dans le fluide nettoyant aide non seulement à minimiser la tension superficielle dans le fluide, à éliminer les particules de coupe et à empêcher l'adhésion des particules au fil de coupe, mais il présente l'avantage supplémentaire d'empêcher l'oxydation du silicium. Les particules de silicium peuvent ensuite être transportées vers une installation de recyclage distante ou déplacées vers un système de recyclage sur site sans avoir été oxydées au préalable. En conséquence, le silicium peut être récupéré pour être ensuite reconstruit en lingots ou en briques de silicium.

### EXPOSÉ DE L'INVENTION

L'invention porte sur un procédé de recyclage d'un mélange de particules issu d'un procédé de découpe d'une pièce en un premier matériau (silicium) au fil à abrasif. Le procédé de découpe concerne la découpe de la pièce en le premier matériau au fil abrasif, la pièce à découper étant fixée à un support sacrificiel.

Le support sacrificiel à la découpe par fil abrasif permet de limiter voire de supprimer la contamination des poudres issues du procédé de découpe afin de les recycler.

Pour cela, le support sacrificiel est en un matériau polymère biodégradable soluble dans un solvant.

Avec un tel support, la contamination des poudres issues de la découpe est considérablement réduite par rapport aux procédés de l'art antérieur et il est ainsi facile de les recycler. Par ailleurs, le nettoyage et/ou le décollement des galettes découpées du support sacrificiel est facilité puisqu'il suffit de dissoudre partiellement ou totalement le substrat de support, dans un solvant approprié.

Par support, on entend un élément suffisamment épais pour être autoporté.

Par polymère biodégradable, on entend un matériau polymère susceptible de subir une dégradation par action enzymatique des micro-organismes, en dioxyde de carbone, composés inorganiques, nouvelle biomasse et eau (en présence d'oxygène) ou méthane (en absence d'oxygène), selon la norme EN NF 13432.

Par soluble, on entend que le matériau polymère présente une fraction soluble supérieure à 10% en poids, et de préférence supérieure à 25% en poids et encore plus préférentiellement supérieure à 50% en poids, dans un solvant donné et à une température donnée (avantageusement, fixée à une température choisie dans la gamme allant de 5°C à 80°C), pour une durée inférieure à 2h, par exemple inférieure à 1h, et de préférence inférieure à 30 minutes. Le matériau polymère peut être totalement soluble dans un solvant donné (i.e. avoir une fraction soluble de 100 %).

Selon une première variante de réalisation avantageuse, le matériau polymère biodégradable est un polymère de synthèse (matériau dit 'bio-polymère').

Avantageusement, le matériau polymère biodégradable de synthèse est du PVA ou du PLA.

Selon une deuxième variante de réalisation avantageuse, le matériau polymère biodégradable est un polymère naturel (matériau dit 'agro-polymère'), tel qu'un oligosaccharide ou un polysaccharide.

Avantageusement, le matériau polymère biodégradable est hydrosoluble.

Selon d'autres variantes de réalisation avantageuses, le matériau polymère biodégradable peut être soluble dans un alcool et/ou une cétone. Il peut être également soluble dans un solvant dit vert tel que le glycérol ou les esters d'acide gras.

Avantageusement, le support sacrificiel comprend des poudres dispersées de manière homogène ou inhomogène. On choisira, avantageusement, des poudres en un même matériau que la pièce qui va être découpée sur le support sacrificiel. Il s'agit, avantageusement, de poudres de silicium recyclé. Ceci permet de recycler les poudres ('kerf') tout en limitant la contamination de la pièce à découper.

Avantageusement, le support sacrificiel comporte des canaux longitudinaux de passage d'un liquide de nettoyage. Il est ainsi possible de faire passer des buses d'aspersion de liquide de nettoyage à l'intérieur des canaux longitudinaux de passage, ce qui permet l'écoulement du liquide entre chaque plaquette et donc conduit à une meilleure propreté.

Avantageusement, le support sacrificiel comporte des rainures, de fixation mécanique à une plaque, notamment une plaque en acier. Le maintien mécanique du support sacrificiel à la plaque est ainsi amélioré par rapport à un simple collage, et les phénomènes de décollement du support à la plaque d'acier sont évités.

Avantageusement, le support sacrificiel est poreux. On choisira une porosité telle que le support sacrificiel peut supporter mécaniquement la pièce à découper tout en limitant la quantité de matière utilisée. De plus, la cinétique de dissolution d'un tel matériau sera plus rapide que celle d'un matériau non poreux, ce qui représente un gain de temps considérable pour un procédé mis en oeuvre à grande échelle.

Le procédé de recyclage selon l'invention comprend les étapes successives suivantes
- fourniture d'un mélange comprenant des premières particules en un premier matériau (dites particules d'intérêt), le premier matériau étant du silicium, et des deuxièmes particules en matériau polymère biodégradable soluble dans un solvant, obtenu selon le procédé de découpe tel que défini ci-après,
- ajout au mélange du solvant, apte à dissoudre les deuxièmes particules en matériau biodégradable, moyennant quoi on obtient une phase solide formée des premières particules en premier matériau et une phase liquide comprenant le solvant dans lequel est dissous le matériau polymère biodégradable,
- séparation de la phase solide de la phase liquide, notamment par une étape de centrifugation ou de filtration, moyennant quoi on obtient une poudre de particules en premier matériau.

Le procédé de découpe comprend les étapes successives suivantes :
- fixation de la pièce à découper, en le premier matériau, sur le support sacrificiel en un matériau polymère biodégradable soluble dans un solvant, tel que défini précédemment,
- découpe de la pièce au fil à abrasif, de préférence au fil diamanté, la découpe étant réalisée jusqu'à entailler le support sacrificiel, moyennant quoi on obtient une tranche fine en un premier matériau et un mélange comprenant des premières particules en premier matériau et des deuxièmes particules en matériau polymère biodégradable.

Le procédé de découpe avec un tel support est simple à mettre en oeuvre et utilise un support en matériau polymère biodégradable. Même si des particules en matériau polymère biodégradable se déposent sur les galettes découpées, elles sont facilement éliminées par dissolution dans un solvant, par exemple un liquide de rinçage, tel que de l'eau ou un alcool, à une température pouvant aller de 5°C à 80°C et de préférence, elles sont éliminées à température ambiante.

Avantageusement, le solvant est de l'eau.

Avantageusement, le solvant est à une température allant de 5°C à 80°C.

Avantageusement, le procédé comporte une étape ultérieure au cours de laquelle la poudre de particules en premier matériau est cristallisée, par exemple sous la forme d'un lingot. Le lingot peut ensuite être découpé au fil à abrasif pour former de nouvelles galettes.

Les particules en matériau polymère biodégradable sont facilement éliminées par dissolution dans un solvant. Avantageusement, il s'agit du liquide de rinçage. A l'issue du procédé de recyclage, le matériau polymère dissout peut être de nouveau solidifié et réutilisé pour former un nouveau support sacrificiel. La solidification peut être réalisée dans un fluide dit non solvant (i.e. dans lequel le matériau polymère n'est pas soluble) et/ou en abaissant la température.

Le procédé de recyclage des particules d'intérêt est intéressant économiquement. Le coût du recyclage est relativement faible, les rendements sont élevés, et il ne nécessite pas l'utilisation de produits chimiques dangereux et donc de traiter les effluents issus du procédé de recyclage. Le procédé produit très peu de déchets.

Avec un tel procédé, il est facile de purifier la poudre d'intérêt en silicium. La poudre obtenue est de meilleure qualité et peut être réutilisée pour fabriquer de nouveaux lingots de silicium. Ceci n'est pas possible avec une poudre de silicium contaminée par des éléments tels que C et O puisque cela conduit à la formation de carbure de silicium et d'oxyde de silicium lors de la fusion du silicium.

La poudre récupérée à l'issue de ce procédé de recyclage présente une pureté élevée par rapport aux impuretés métalliques (typiquement une pureté d'au moins 99,99%) et une faible teneur en carbone et en oxygène (typiquement [C]<0,07% et [O]<0,2% et préférentiellement [C]<0,004% et [O]<0,2%). Les lingots obtenus avec cette poudre sont de bonne qualité.

Le procédé de recyclage peut comporter une étape de fabrication d'un support sacrificiel au cours de laquelle le matériau polymère biodégradable est mis en forme par exemple par impression 3D ou par moulage.

D'autres caractéristiques et avantages de l'invention ressortiront du complément de description qui suit.

Il va de soi que ce complément de description n'est donné qu'à titre d'illustration de l'objet de l'invention telle que définie par les revendications, et ne doit en aucun cas être interprété comme une limitation de cet objet.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
Les figures 1A et 1B représentent, selon une vue frontale partielle, différents supports sacrificiels pour découper une pièce au fil à abrasifs, selon différents modes de réalisation de l'invention,
La figure 2 représente, selon une vue frontale partielle, d'un ensemble comportant un support sacrificiel, assemblé avec une plaque, et supportant une pièce à découper, selon une mode de réalisation particulier de l'invention.
Les figures 3A et 3B représentent de manière schématique en perspective, des étapes d'un procédé de découpe d'un matériau en silicium, positionné sur un support sacrificiel, selon différents modes de réalisation particulier de l'invention.
LA figure4 est un graphique représentant le temps de dissolution du sucre en fonction de la température de l'eau.
Les figures 5A, 5B et 5C illustrent respectivement en perspective respectivement des étapes de briquetage, d'éboutage et de découpe d'un matériau en silicium, selon des différents modes de réalisation particulier de l'invention,
La figure 6 est un graphique représentant le pourcentage volumique de dissolution du PVA dans de l'eau à 80°C en fonction du temps.
Les figures 7A et7B sont des clichés photographiques d'un substrat sacrificiel en sucre, respectivement, avant et après découpage au fil diamanté, selon un mode de réalisation.
Les figures 8A et 8B sont des clichés photographiques d'un bloc de silicium, fixé sur un substrat sacrificiel en sucre, lui-même positionné sur une plaque en résine, respectivement avant et après découpe au fil diamanté, selon un mode de réalisation particulier de l'invention.
La figure 9 est un cliché photographique de fines tranches de silicium obtenues, après découpe du bloc de silicium représenté sur la figure 8A, selon un mode de réalisation particulier de l'invention.
La figure 10 est un cliché photographique d'un bloc de silicium, fixé, sans colle, sur un substrat sacrificiel en PVA, selon un mode de réalisation particulier de l'invention.
La figure 11 est un cliché photographique de fines tranches de silicium obtenues, après découpe du bloc de silicium représenté sur la figure 10, selon un mode de réalisation particulier de l'invention.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

En outre, dans la description ci-après, des termes qui dépendent de l'orientation, tels que « dessus », «dessous », etc. d'une structure s'appliquent en considérant que la structure est orientée de la façon illustrée sur les figures.

### EXPOSÉ DÉTAILLÉ DE MODES DE RÉALISATION PARTICULIERS

Par la suite, même si la description fait référence à la découpe par fil d'une pièce en silicium cristallin, de préférence monocristallin, l'invention est transposable à la découpe d'une pièce en un autre matériau, par exemple en un autre matériau semi-conducteur.

Bien que cela ne soit aucunement limitatif, l'invention trouve particulièrement des applications dans le domaine du photovoltaïque et des semiconducteurs.

### Procédé de découpe d'une pièce 30 en silicium :

Le procédé de découpe comprend les étapes successives suivantes :
- fourniture d'un support sacrificiel 10, en un matériau polymère biodégradable soluble dans un solvant,
- fixation d'une pièce 30 en silicium à découper sur un support sacrificiel 10,
- découpe de la pièce 30 en silicium cristallin, de préférence en présence d'un fluide de découpe, avec un fil à abrasif 20, la découpe étant réalisée jusqu'à entailler le support sacrificiel, moyennant quoi on obtient au moins une tranche fine en silicium et un mélange d'une poudre de particules en silicium cristallin et d'une poudre de particules du support sacrificiel 10.

Le support sacrificiel 10 (aussi appelé « beam ») utilisé lors du procédé de découpe par fil est en un matériau spécifique.

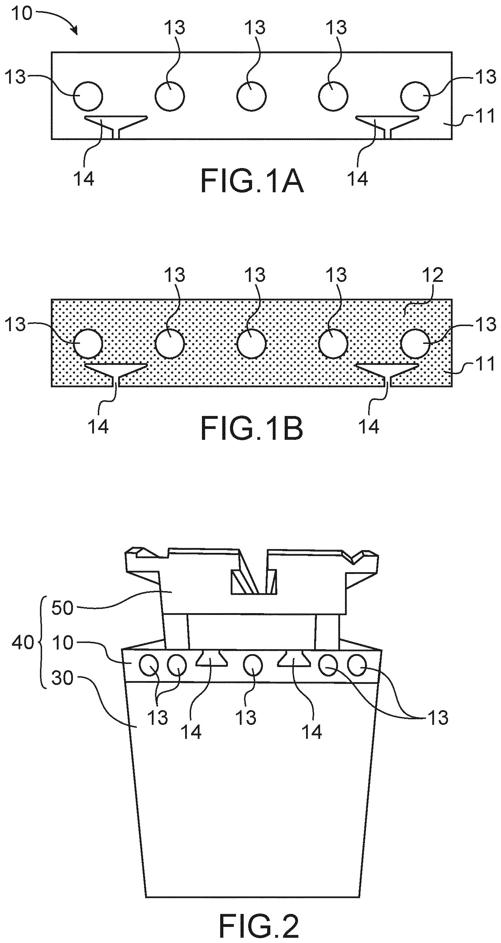

Le support sacrificiel 10 comprend, et de préférence, est constitué du matériau polymère biodégradable 11 (figure 1A).

Le matériau polymère biodégradable répond à la norme NF EN 13432.

Le matériau polymère biodégradable peut être un polymère naturel. Par exemple, il peut s'agir d'un polysaccharide, ou d'un oligosaccharide, i.e. un polymère ou un oligomère comprenant plusieurs molécules de monosaccharides. Les monosaccharides peuvent être, par exemple, des trioses, tétroses, pentoses, hexoses, ou heptoses. De préférence il s'agit d'hexoses et notamment de fructose ou de glucose. On choisira, par exemple, un disaccharide (ou diholoside) tel que le saccharose (appelé communément sucre). Il peut s'agir d'une autre forme transformée du sucre, obtenue par chauffage du sucre. Par exemple, il peut s'agir de caramel ou de sucre charbon.

Le matériau polymère biodégradable peut être un polymère de synthèse. Par exemple, il s'agit du polyacétate de vinyle (PVA), de l'acide polyglycolique (PGA), de l'acide polylactique-co-glycolique (PLGA), d'un polyester ou d'un copolyester tel que la polycaprolactrone (PCL), l'acide polylactique (PLA), le polybutylène succinate (PBS), le poly(butylène succinate-co-adipate) (PBSA), et le poly (butylène adipate-co-téréphtalate) (PBAT). Il peut également s'agir d'un de leurs copolymères. Parmi les PLA, on pourra choisir le poly-L-lactide (PLLA) et le poly-D-lactide (PDLA).

Ce matériau a comme propriété particulière de pouvoir se dissoudre dans un fluide dit de rinçage, utilisé pour rincer la poudre de silicium (aussi appelée « kerf ») issue du procédé de découpe et récoltée en vue de sa valorisation.

Le matériau polymère biodégradable est soluble dans un solvant organique (de préférence dans un alcool ou une cétone) et/ou soluble dans l'eau (hydrosoluble). Avantageusement, on pourra choisir un matériau soluble dans un solvant dit vert tel que le glycérol ou les esters d'acide gras. Avantageusement, on choisira un matériau pouvant se dissoudre dans un solvant peu dangereux pour les personnes et l'environnement.

Avantageusement, le matériau est soluble à des températures allant de 20°C à 80°C.

On choisira un matériau solide à une température inférieure ou égale à 50°C, notamment à température ambiante (typiquement 20-25°C), lorsqu'il n'est pas mis en contact avec une solution dans laquelle il peut se dissoudre. Par solide, on entend qu'il peut servir de support lors de la découpe, et être découpé au fil diamanté.

Le support sacrificiel 10 peut comporter, en outre, des particules 12, de préférence, en un même matériau que la pièce 30 à découper (figure 1B). Plus particulièrement, les particules 12 sont en un matériau semi-conducteur ou à base d'un matériau semi-conducteur (c'est-à-dire qu'elles comprennent au moins 50% massique du matériau semi-conducteur). Selon un mode de réalisation avantageux, le support sacrificiel 10 est constitué du matériau polymère biodégradable 11 et des particules 12.

Par particules, on entend des éléments de forme, par exemple, sphériques, allongées, ovoïdes. Dans le cas de particules sphériques, la plus grande dimension correspond au diamètre. Cette taille peut être déterminée par spectroscopie à corrélation de photons.

On pourra choisir des particules de silicium broyées ayant une plus grande dimension allant de 200µm à 500µm.

On choisira, avantageusement, des particules 12 de silicium, recyclé, provenant des poudres de silicium récupérées à la suite d'une découpe par fil à abrasifs liés. De telles particules ont une plus grande dimension inférieure à 10µm, par exemple de 100nm à 10µm, de préférence de 1µm à 10µm.

L'incorporation de particules 12 de silicium avec un matériau 11 hydrosoluble comme le sucre peut, avantageusement, ralentir la dissolution du support sacrificiel 10.

Le support sacrificiel 10 peut être poreux. Par exemple, il a une porosité allant de 5% à 50% et/ou des pores ayant des diamètres de pores allant de 0,5 µm à 1 mm, de préférence de 0,1 à 0,5 mm). Les pores peuvent former un réseau interconnecté. Les pores sont ouverts sur au moins l'une des surfaces extérieures du support sacrificiel 10.

Le support sacrificiel 10 a une épaisseur allant de 5 mm à 30 mm, par exemple de 10 mm à 20 mm. Il peut avoir une longueur allant de 250 à 800 mm et une largeur allant de 125 à 170 mm. Les dimensions seront choisies en fonction de la taille de la pièce 30 à découper.

Comme représenté sur les figures 1A, 1B et 2, le support sacrificiel 10 peut comporter des canaux longitudinaux 13. Les canaux longitudinaux 13 de passage d'un liquide de nettoyage permettent un nettoyage efficace des plaquettes de silicium. Les canaux 13 peuvent être agencés de manière à former une structure alvéolée.

Le support sacrificiel 10 peut également comporter des rainures 14 de fixation mécanique pour fixer le support sacrificiel 10 à une plaque 50, notamment, en acier 50. La plaque en acier permet de porter le support sacrificiel 10 dans le dispositif de découpe par fil. De façon avantageuse, ces rainures de fixation 6 permettent un assemblage mécanique aisé du support 10 à la plaque 50.

Le support sacrificiel 10, la plaque 50, et la pièce à découper 10, forment un ensemble 40 destiné à être intégré à un dispositif de découpe par fil (figure 2).

Le support sacrificiel 10 à la découpe par fil peut comporter l'une ou plusieurs des caractéristiques précédentes prises isolément ou suivant toutes combinaisons techniques possibles.

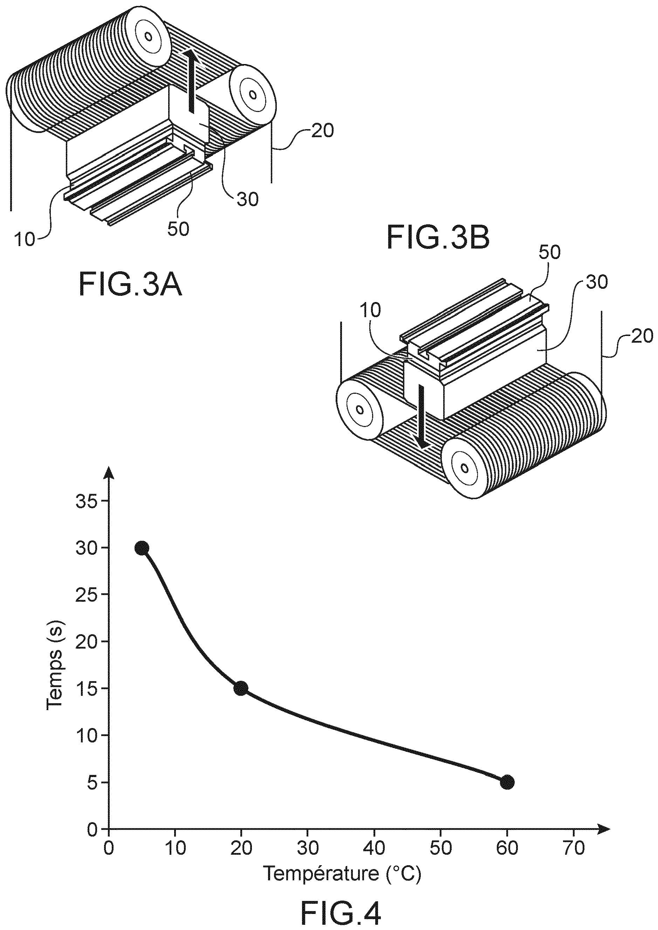

Selon un mode de réalisation particulier, représenté sur la figure 3A, lors du procédé de découpe, la pièce à découper 30 peut être positionnée au-dessus du substrat sacrificiel 10.

Selon un autre mode de réalisation, représenté sur la figure 3B, la pièce à découper 30 peut être positionnée au-dessous du substrat sacrificiel 10.

Le substrat sacrificiel 10 peut être fixé à la pièce à découper 30 par l'intermédiaire d'une colle. La colle sera, avantageusement choisie de manière à limiter au maximum la contamination.

Selon une autre variante de réalisation, le substrat sacrificiel 10 peut être fixé à la pièce à découper 30 sans colle additionnelle. Par exemple, il est possible de simplement mouiller le substrat sacrificiel 10 avec de l'eau, positionner la pièce à découper 30 sur le substrat sacrificiel 10 puis laisser sécher. Après séchage, le substrat sacrificiel 10 et la pièce à découper 30 sont solidaires.

Selon une autre variante de réalisation, le substrat sacrificiel 10 est moulé autour de la pièce 30 à découper. Ce mode de réalisation est particulièrement avantageux, puisque le substrat sacrificiel 10 est directement en contact avec la pièce à découper. Il n'y a pas d'élément intermédiaire, ce qui réduit la contamination.

Le fluide de découpe utilisé est une solution aqueuse. La solution aqueuse peut contenir un surfactant pour refroidir et/ou lubrifier.

Le fluide de découpe est, par exemple, à une température allant de 10°C à 80°C. Avantageusement, la température du fluide de découpe est la température ambiante (20-25°C).

Lorsque le support sacrificiel 10 est soluble dans le fluide de découpe, à température ambiante, on pourra diminuer la température du fluide de découpe de manière à réduire la solubilité. Par exemple, pour un support sacrificiel en sucre, l'utilisation d'une température de 10°C pendant la découpe augmente de 67% le temps nécessaire pour dissoudre le support en sucre dans le fluide de découpe (figure 4).

Selon un mode de réalisation particulier, la surface du support sacrificiel 10 peut être recouverte par une fine couche d'un matériau, avantageusement hydrophile, peu contaminant pour protéger le support sacrificiel lorsque ce dernier est soluble dans le fluide de découpe. Avantageusement, ce matériau résiste au passage du fil 20 en fin de coupe.

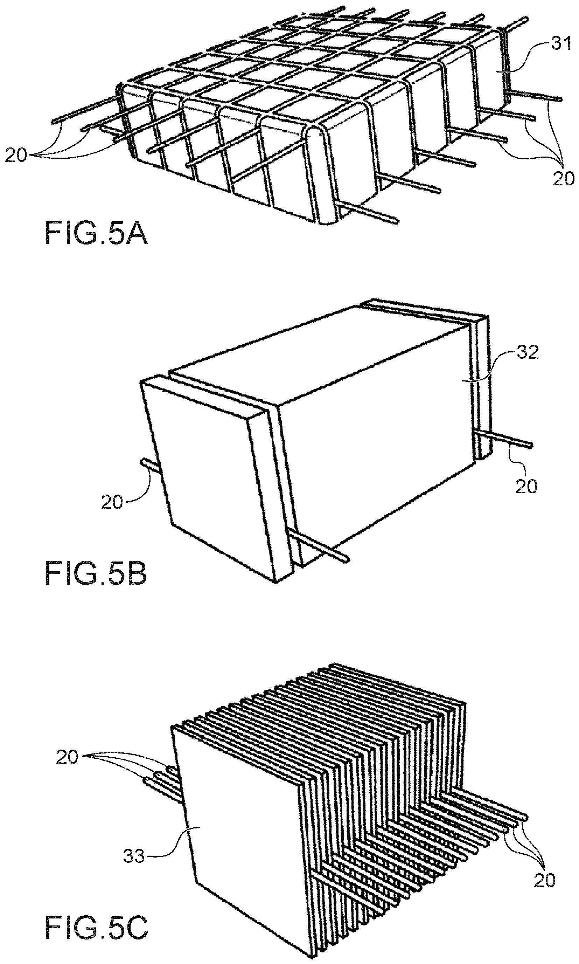

Le procédé de découpe par fil 20 peut être utilisé dans toutes les étapes de découpe du silicium mises en oeuvre pour passer du stade de simples lingots au stade de la formation de substrats (ou « wafers » en anglais), destinés à la fabrication des cellules photovoltaïques. Ainsi, plus précisément, ces étapes comprennent successivement :
i) l'étape de briquetage (encore appelée « squaring » en anglais) qui correspond à la découpe des lingots 31 en briques 32 de section normalisée par des fils 20 de découpes agencés de façon matricielle (figure 5A) ;
ii) l'étape d'éboutage (encore appelée « cropping » en anglais) qui consiste à ôter les parties supérieure et inférieure de chaque brique 32 qui contiennent des précipités d'impuretés dues à la cristallisation, et qui sont indésirables pour les étapes de fabrication ultérieures (figure 5B) ;
iii) l'étape de découpe (ou encore « wafering » ou « slicing » en anglais) qui permet enfin de former les substrats 33 ou « galettes », à partir des briques 32 tronquées sur leurs parties supérieure et inférieure, présentant une épaisseur variant de 100 à 300 µm (figure 5C).

On entend par découpe par fil 20, au moins l'une des trois variantes de réalisation de la découpe par fil, à savoir : soit une nappe de plusieurs fils, désignée par l'expression « nappe de fils », comprenant plusieurs fils distincts tous sensiblement parallèles entre eux, chaque fil formant un enroulement autour d'organes rotatifs; soit un fil unique formant une boucle unique ; soit un fil unique enroulé plusieurs fois pour former une pluralité d'enroulements autour d'organes rotatifs définissant ainsi une nappe de brins du fil, tous sensiblement parallèles entre eux, cette nappe de brins du fil étant désignée par l'expression « nappe de fil », fil étant au singulier. Le choix dépend alors du type de dispositif de découpe par fil.

La découpe par fil peut être une découpe à abrasifs libres ou une découpe à abrasifs liés.

Dans la découpe à abrasifs libres, des grains d'abrasif, généralement du carbure de silicium, sont incorporés à une solution spécifique, contenant par exemple du polyéthylène glycol (PEG), formant un liquide de coupe (connu sous l'appellation « slurry » en anglais). Ce liquide de coupe est alors déversé entre le fil de découpe, typiquement en acier, et la pièce à découper. Les grains d'abrasif sont mis en mouvement grâce au glissement de ces deux corps l'un contre l'autre, et abrasent ainsi la matière par de multiples micro-indentations provoquées par le roulement des particules abrasives sur la pièce à découper.

Dans la découpe à abrasifs liés, des grains d'abrasif, généralement des diamants (d'où l'appellation courant de « découpe par fil diamanté »), sont fixés sur la surface du fil et viennent alors rayer le matériau de la pièce à découper. On choisira avantageusement cette découpe pour la découpe du silicium monocristallin.

La poudre de silicium obtenue à l'issue d'un procédé de découpe par fil présente, par exemple, une morphologie de type copeaux.

Le mélange de poudre de silicium et de poudre de matériau polymère biodégradable est ensuite récupéré en vue de recycler la poudre de silicium.

### Procédé de recyclage de la poudre de silicium :

Le procédé de recyclage d'une poudre de silicium (« kerf ») contenant des particules de matériau polymère biodégradable comprend les étapes successives suivantes :
- fourniture du mélange comprenant la poudre de silicium et les particules en un matériau polymère biodégradable, obtenu selon le procédé tel que défini précédemment,
- ajout d'un solvant au mélange, le solvant étant apte à dissoudre les particules en matériau polymère biodégradable, moyennant quoi on obtient une phase solide formée de la poudre en premier matériau et une phase liquide comprenant le solvant dans lequel est dissous le matériau polymère biodégradable,
- éventuellement, séparation de la phase solide de la phase liquide, notamment par une étape de centrifugation ou de filtration, moyennant quoi on obtient une poudre de particules en premier matériau.

Avantageusement, le solvant est le fluide de rinçage. Le solvant est, avantageusement, de l'eau. Il n'y a pas besoin de rajouter un fluide additionnel pour dissoudre le matériau polymère biodégradable.

Selon une autre alternative, le matériau polymère biodégradable n'est pas soluble dans le fluide de rinçage. L'ajout d'un solvant au fluide de rinçage est alors nécessaire pour dissoudre le matériau polymère biodégradable. Il peut s'agir d'un solvant organique, tel qu'un alcool ou une cétone.

Le solvant et/ou le fluide de rinçage est, par exemple, à une température allant de 5°C à 80°C. De préférence, il est à une température allant de 20°C à 60°C. Il est, par exemple, à température ambiante (i.e. de 20 à 25°C).

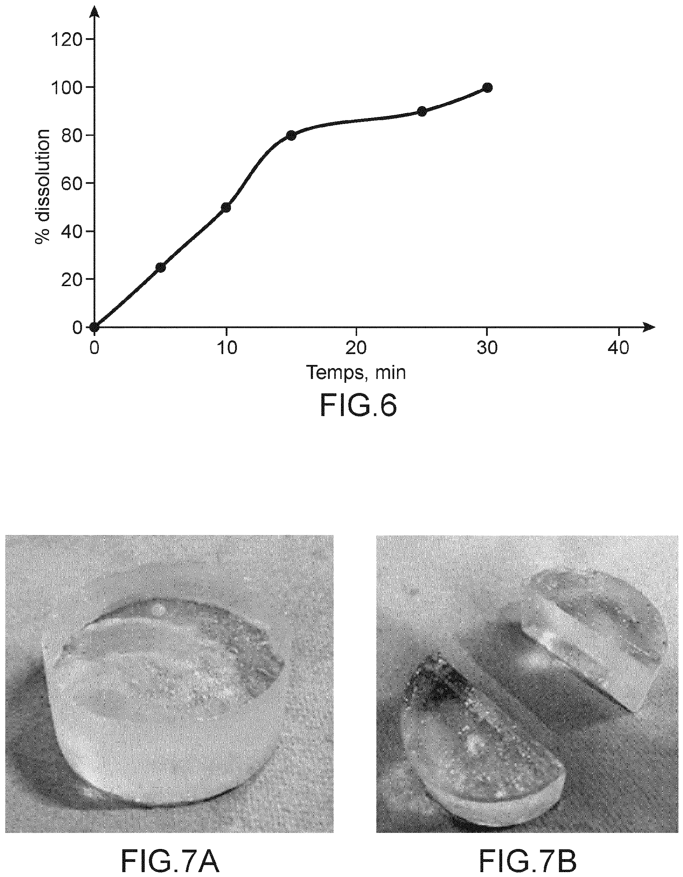

A titre illustratif, pour le PVA, le solvant peut être de l'eau. Un bloc de PVA de dimension 30 X 20 X 5 mm se dissout rapidement (en moins de 30 minutes) dans de l'eau à 80°C (figure 6).

### Procédé de fabrication du support sacrificiel 10 :

Le support sacrificiel 10 peut être fabriqué avec un procédé d'impression tridimensionnelle (appelée communément impression 3D).

Ce procédé consiste à faire fondre localement un fil du polymère biodégradable au travers d'une buse et à le déposer, sur un substrat, en formant des lignes collées les unes aux autres.

Alternativement, le support sacrificiel 10 peut être formé par moulage.

### Exemples illustratifs et non limitatifs d'un mode de réalisation :

Dans cet exemple, le substrat 10 est obtenu en mélangeant du sucre de canne en morceaux, de sirop de glucose déshydraté et de l'eau avec un rapport volumique de 12 - 4,5 - 4. Le mélange est porté à 150°C de manière à obtenir le sucre dit sucre d'orge. Le mélange est ensuite versé dans différents moules en silicone. Après refroidissement le sucre est dur et transparent (figure 7A). Ce support sacrificiel 10 en sucre se découpe très facilement au fil 20 diamanté (figure 7B).

Le substrat 10 a été utilisé pour découper un bloc de silicium 30 (50 x 40 x 40 mm). Pour cela, le substrat 30 est positionné dans un équipement de découpe par fil diamanté de R&D (TAKATORI). Dans cet équipement, la nappe de fils 20 est positionnée au-dessus du bloc à découper et le bloc monte au cours de la découpe (comme représenté sur la figure 2 précédemment décrite).

L'équipement comprend trois buses d'aspersion : deux latérales qui arrosent la nappe de fil de part et d'autre du bloc de silicium et une supérieure/centrale qui arrose abondamment le bloc de silicium. L'eau de découpe est un mélange d'eau de ville et de fluide réfrigérant (référencé sous la dénomination Blaser DWS 500) à 2% volumique.

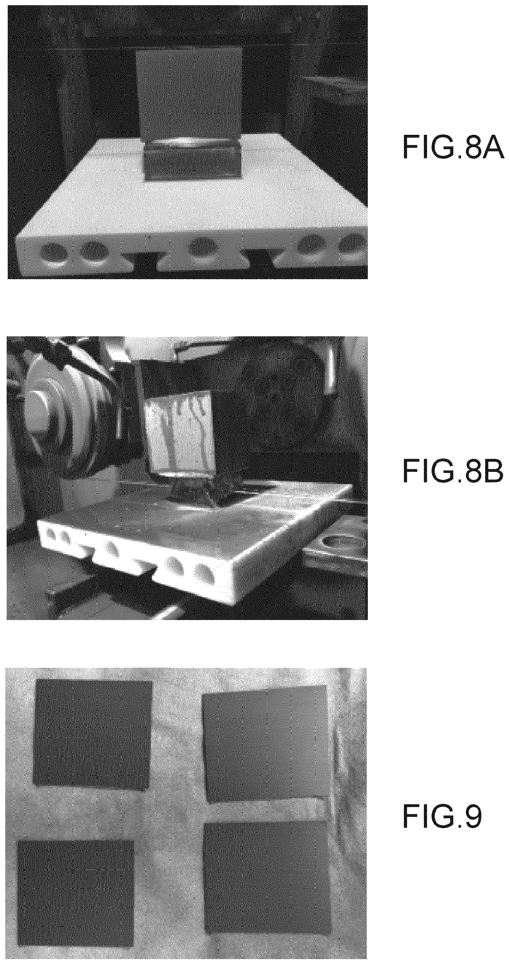

Le bloc de silicium 30 est collé sur le support 10 en sucre lui-même étant collé sur un support standard, fixé par un ruban adhésif à la plaque en acier 50 de l'équipement TAKATORI (voir figure 8A). La colle utilisée lors de ces essais est la colle habituellement utilisée dans les procédés de découpe et référencée sous le nom commercial, DELO RM885.

Après collage et séchage, le bloc de silicium est découpé avec un fil diamanté 20 selon les paramètres donnés dans le tableau suivant :

| | |
|---|---|
| Vitesse fil | 500 m/min |
| Vitesse table | 1,5 mm/min |
| Longueur A/R | 200 m |
| Renouvèlement du fil | 1 m/min |

La découpe s'est déroulée sans incident et quelques minutes avant la fin de coupe la buse centrale a été arrêtée. Une partie du substrat en sucre s'est dissoute dans l'eau de découpe qui a coulé sous le bloc de silicium lorsqu'une lubrification importante était présente (figure 8B). Néanmoins, le bloc de silicium est resté collé au support sacrificiel 10 en sucre qui est lui-même resté collé au substrat sur lequel il était fixé.

La flèche du fil s'est résorbée (figure 9).

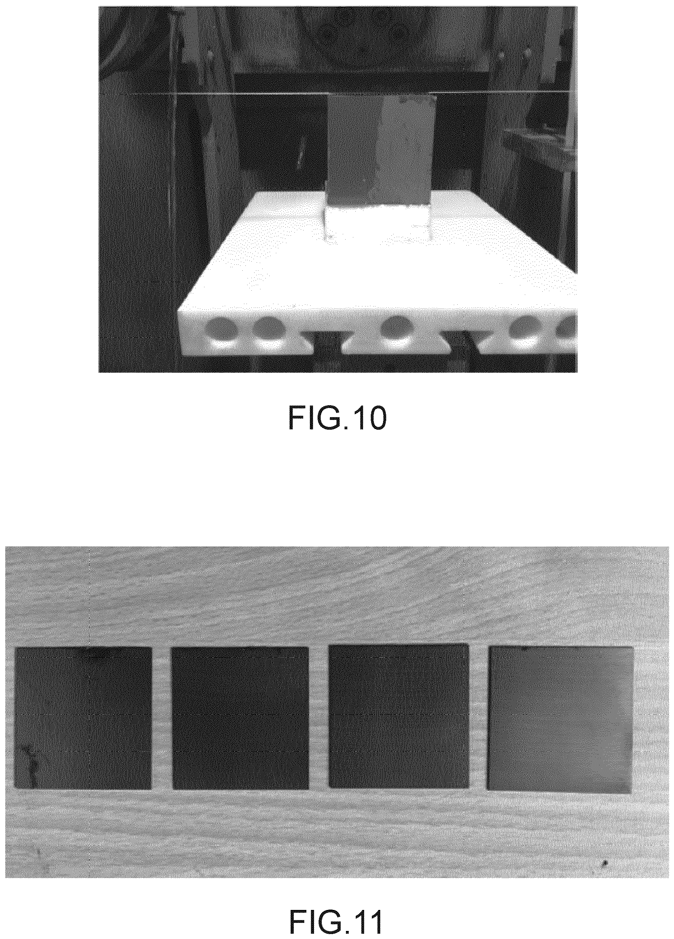

Un substrat 10 en PVA a également été réalisé par impression 3D. La surface du substrat 10 a été mouillée, par étalement d'une petite quantité d'eau, et un bloc de silicium 30 (50 x 40 x 40 mm) a été positionné sur le substrat 10. Après séchage, le bloc de silicium adhère au substrat 10 (figure 10). Aucune colle n'a été utilisée pour cet assemblage.

Le bloc de silicium est découpé avec un fil diamanté 20 dans l'équipement TAKATORI selon les paramètres donnés dans le tableau suivant :

| | |
|---|---|
| Vitesse fil | 500 m/min |
| Vitesse table | 1,0 mm/min |
| Longueur A/R | 200 m |
| Renouvèlement du fil | 1 m/min |

Des wafers de bonne qualité ont été obtenus (figure 11).

## Revendications

1. Procédé de recyclage d'un mélange de particules issu d'un procédé de découpe au fil (20) à abrasif comprenant les étapes successives suivantes :
- fourniture d'un mélange comprenant des premières particules en un premier matériau et des deuxièmes particules en un matériau polymère biodégradable soluble dans un solvant, obtenu selon un procédé de découpe d'une pièce (30) en le premier matériau au fil (20) à abrasif comprenant les étapes successives suivantes :
- fixation de la pièce (30) à découper, en le premier matériau, le premier matériau étant du silicium, sur un support sacrificiel (10) en un matériau polymère biodégradable (11) soluble dans un solvant ;
- découpe de la pièce (30) au fil (20) à abrasif, de préférence au fil diamanté, la découpe étant réalisée jusqu'à entailler le support sacrificiel (10), moyennant quoi on obtient une tranche fine en premier matériau et un mélange comprenant des premières particules en le premier matériau et des deuxièmes particules en le matériau polymère biodégradable ;
- ajout au mélange du solvant apte à dissoudre les deuxièmes particules en matériau biodégradable, moyennant quoi on obtient une phase solide formée des premières particules en premier matériau et une phase liquide comprenant le solvant dans lequel est dissous le matériau polymère biodégradable,
- séparation de la phase solide de la phase liquide, notamment par une étape de centrifugation ou de filtration, moyennant quoi on obtient une poudre de particules en premier matériau.

2. Procédé de recyclage selon la revendication 1, **caractérisé en ce que** le solvant est de l'eau.

3. Procédé de recyclage selon l'une quelconque des revendications 1 et 2, **caractérisé en ce que** le solvant est à une température allant de 5°C à 80°C.

4. Procédé de recyclage selon l'une quelconque des revendications 1 à 3, **caractérisé en ce que** le procédé comporte une étape ultérieure au cours de laquelle la poudre de particules en premier matériau est cristallisée, par exemple sous la forme d'un lingot.

5. Procédé de recyclage selon l'une quelconque des revendications 1 à 4, comprenant une étape de fabrication du support sacrificiel (10) au cours de laquelle le matériau polymère biodégradable est mis en forme par impression 3D ou par moulage.

6. Procédé de recyclage selon l'une quelconque des revendications 1 à 5, dans lequel le matériau polymère biodégradable (11) est un polymère de synthèse, tel que du PVA ou du PLA.

7. Procédé de recyclage selon l'une quelconque des revendications 1 à 5, dans lequel le matériau polymère biodégradable (11) est un polymère naturel, tel qu'un oligosaccharide.

8. Procédé de recyclage selon l'une quelconque des revendications 1 à 7, dans lequel le matériau polymère biodégradable (11) est hydrosoluble.

9. Procédé de recyclage selon l'une quelconque des revendications 1 à 8, dans lequel le support sacrificiel (10) comprend des poudres (12), de préférence en un même matériau que la pièce à découper au fil à abrasif.

10. Procédé de recyclage selon l'une quelconque des revendications 1 à 9, dans lequel le support sacrificiel (10) comporte des canaux longitudinaux (13) de passage d'un liquide de nettoyage.

11. Procédé de recyclage selon l'une quelconque des revendications 1 à 10, dans lequel le support sacrificiel (10) comporte des rainures (14), de fixation mécanique à une plaque (50), notamment une plaque en acier.

12. Procédé de recyclage selon l'une quelconque des revendications 1 à 11, dans lequel le support sacrificiel (10) est poreux.

## Patentansprüche

1. Verfahren zum Wiederverwerten einer Partikelmischung, die aus einem Schleifdrahtschneideverfahren (20) stammt, umfassend die folgenden aufeinanderfolgenden Schritte:
- Bereitstellen einer Mischung, die erste Partikel aus einem ersten Material und zweite Partikel aus einem biologisch abbaubaren Polymermaterial, das in einem Lösungsmittel löslich ist, umfasst und gemäß einem Verfahren zum Schneiden eines Werkstücks (30) aus dem ersten Material mit einem Schleifdraht (20) erhalten wird, das die folgenden aufeinanderfolgenden Schritte umfasst:
- Befestigen des zu schneidenden Werkstücks (30) aus dem ersten Material, wobei das erste Material Silizium ist, auf einem Opferträger (10) aus einem biologisch abbaubaren Polymermaterial (11), das in einem Lösungsmittel löslich ist;
- Schneiden des Werkstücks (30) mit einem Schleifdraht (20), vorzugsweise einem Diamantdraht, wobei das Schneiden durchgeführt wird, bis der Opferträger (10) eingeschnitten ist, wodurch eine dünne Scheibe aus dem ersten Material und eine Mischung erhalten wird, die erste Partikel aus dem ersten Material und zweite Partikel aus dem biologisch abbaubaren Polymermaterial umfasst;
- Zugeben des Lösungsmittels, das geeignet ist, die zweiten Partikel aus dem biologisch abbaubaren Material aufzulösen, zu der Mischung, wodurch eine feste Phase, die aus den ersten Partikeln aus dem ersten Material gebildet wird, und eine flüssige Phase, die das Lösungsmittel umfasst, in dem das biologisch abbaubare Polymermaterial aufgelöst wird, erhalten werden,
- Trennen der festen Phase von der flüssigen Phase, insbesondere durch einen Schleuder- oder Filterschritt, wodurch ein Pulver aus Partikeln aus dem ersten Material erhalten wird.

2. Wiederverwertungsverfahren nach Anspruch 1, **dadurch gekennzeichnet, dass** das Lösungsmittel Wasser ist.

3. Wiederverwertungsverfahren nach einem der Ansprüche 1 und 2, **dadurch gekennzeichnet, dass** das Lösungsmittel eine Temperatur im Bereich von 5 °C bis 80 °C aufweist.

4. Wiederverwertungsverfahren nach einem der Ansprüche 1 bis 3, **dadurch gekennzeichnet, dass** das Verfahren einen nachfolgenden Schritt umfasst, bei dem das Partikelpulver aus dem ersten Material kristallisiert wird, zum Beispiel in Form eines Blocks.

5. Wiederverwertungsverfahren nach einem der Ansprüche 1 bis 4, das einen Schritt des Herstellens des Opferträgers (10) umfasst, bei dem das biologisch abbaubare Polymermaterial durch 3D-Drucken oder Formen geformt wird.

6. Wiederverwertungsverfahren nach einem der Ansprüche 1 bis 5, wobei das biologisch abbaubare Polymermaterial (11) ein synthetisches Polymer, wie etwa PVA oder PLA, ist.

7. Wiederverwertungsverfahren nach einem der Ansprüche 1 bis 5, wobei das biologisch abbaubare Polymermaterial (11) ein natürliches Polymer, wie etwa ein Oligosaccharid, ist.

8. Wiederverwertungsverfahren nach einem der Ansprüche 1 bis 7, wobei das biologisch abbaubare Polymermaterial (11) wasserlöslich ist.

9. Wiederverwertungsverfahren nach einem der Ansprüche 1 bis 8, wobei der Opferträger (10) Pulver (12) umfasst, vorzugsweise aus dem gleichen Material wie das mit einem Schleifdraht zu schneidende Werkstück.

10. Wiederverwertungsverfahren nach einem der Ansprüche 1 bis 9, wobei der Opferträger (10) Längskanäle (13) zum Durchtritt einer Reinigungsflüssigkeit enthält.

11. Wiederverwertungsverfahren nach einem der Ansprüche 1 bis 10, wobei der Opferträger (10) Vertiefungen (14) zum mechanischen Befestigen an einer Platte (50), insbesondere einer Stahlplatte, enthält.

12. Wiederverwertungsverfahren nach einem der Ansprüche 1 bis 11, wobei der Opferträger (10) porös ist.

## Claims

1. Method for recycling a mixture of particles resulting from a method for cutting by abrasive wire (20), comprising the following successive steps:
- providing a mixture comprising first particles of a first material and second particles of a biodegradable polymer material soluble in a solvent, obtained according to a method for cutting a part (30) made from the first material with abrasive wire (20), comprising the following successive steps:
- securing the part (30) to be cut, made from the first material, the first material being silicon, on a sacrificial support (10) made from a biodegradable polymer material (11) soluble in a solvent;
- cutting the part (30) with the abrasive wire (20), preferably a diamond wire, the cutting being implemented until the sacrificial support (10) is notched, by means of which a thin slice of a first material and a mixture comprising first particles of the first material and second particles of the biodegradable polymer material are obtained;
- adding to the mixture solvent able to dissolve the second particles of biodegradable material, by means of which a solid phase formed by the first particles made from the first material and a liquid phase comprising the solvent in which the biodegradable polymer material is dissolved are obtained,
- separating the solid phase from the liquid phase, in particular by a centrifugation or filtration step, by means of which a powder of particles of the first material is obtained.

2. Recycling method according to claim 1, **characterized in that** the solvent is water.

3. Recycling method according to either one of claims 1 and 2, **characterized in that** the solvent is at a temperature ranging from 5°C to 80°C.

4. Recycling method according to any one of claims 1 to 3, **characterized in that** the method includes a subsequent step during which the powder of particles of the first material is crystallized, for example in the form of an ingot.

5. Recycling method according to any one of claims 1 to 4, comprising a step of manufacturing the sacrificial support (10) during which the biodegradable polymer material is shaped by 3D printing or by molding.

6. Recycling method according to any one of claims 1 to 5, wherein the biodegradable polymer material (11) is a synthesis polymer, such as PVA or PLA.

7. Recycling method according to any one of claims 1 to 5, wherein the biodegradable polymer material (11) is a natural polymer, such as an oligosaccharide.

8. Recycling method according to any one of claims 1 to 7, wherein the biodegradable polymer material (11) is water-soluble.

9. Recycling method according to any one of claims 1 to 8, wherein the sacrificial support (10) comprises powders (12), preferably of the same material as the part to be cut by abrasive wire.

10. Recycling method according to any one of claims 1 to 9, wherein the sacrificial support (10) includes longitudinal channels (13) for a cleaning liquid to pass.

11. Recycling method according to any one of claims 1 to 10, wherein the sacrificial support (10) includes grooves (14) for mechanical securing to a plate (50), in particular a steel plate.

12. Recycling method according to any one of claims 1 to 11, wherein the sacrificial support (10) is porous.
